(19) Europäisches Patentamt
European Patent Office
Office européen des brevets

(11) **EP 3 499 275 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(51) Int Cl.:
***G01V 8/20*** *(2006.01)*

(21) Anmeldenummer: **18212455.2**

(22) Anmeldetag: **13.12.2018**

(54) **VERFAHREN ZUM BETREIBEN EINER LICHTSCHRANKENANORDNUNG**

METHOD FOR OPERATING A LIGHT BARRIER ASSEMBLY

PROCÉDÉ DE FONCTIONNEMENT D'UN DISPOSITIF DE BARRIÈRE PHOTOÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2017 CH 15182017**

(43) Veröffentlichungstag der Anmeldung:
**19.06.2019 Patentblatt 2019/25**

(73) Patentinhaber: **ELESTA GmbH**
**7310 Bad Ragaz (CH)**

(72) Erfinder:
• **WERNER, Christoph**
**9443 Widnau (CH)**
• **MAFFIOLI, Massimo**
**6713 Malvaglia (CH)**
• **VOGEL, Michael**
**8494 Bauma (CH)**

(74) Vertreter: **Riederer Hasler & Partner Patentanwälte AG**
**Elestastrasse 8**
**7310 Bad Ragaz (CH)**

(56) Entgegenhaltungen:
**EP-A2- 2 071 363       EP-A2- 2 631 682**
**DE-A1-102012 103 864   DE-A1-102013 106 785**

EP 3 499 275 B1

**Beschreibung**

Die Erfindung betrifft ein Verfahren zum Betreiben einer Lichtschrankenanordnung gemäss Oberbegriff des Anspruchs 1. Die Erfindung betrifft ausserdem eine Lichtschrankenanordnung gemäss Oberbegriff des Anspruchs 8.

Die Erfindung liegt ganz allgemein auf dem Gebiet der Sicherheitstechnik im Sinne von Schutz von Personen oder materiellen Werten vor Gefahren, die von automatisiert arbeitenden Anlagen oder Maschinen ausgehen, wie z.B. von automatisiert arbeitenden Robotern. Eine typische Schutzmaßnahme besteht darin, den Gefahrenbereich einer solchen Anlage abzusperren, so dass ein Betreten des Gefahrenbereichs entweder verhindert wird oder zum Anhalten, zum Abschalten oder anderweitigen Entschärfen der gefährlichen Betriebssituation führt. Zum Absperren eines solchen Gefahrenbereichs werden häufig mechanische Schutzzäune oder Schutztüren verwendet. In vielen Fällen ist jedoch ein Zugang in den abgesicherten Gefahrenbereich notwendig, sei es, weil eine Bedienperson regelmäßig Zugang zu der Maschine benötigt oder weil Material in den oder aus dem Gefahrenbereich transportiert werden muss. Für solche Fälle werden häufig optoelektronische Schutzeinrichtungen eingesetzt, insbesondere Lichtschranken, die je nach Ausführung und Anordnung auch als Lichtgitter oder Lichtvorhänge bezeichnet werden. Je nach Anforderung sollen Lichtschranken Finger-, Hand- oder Körperschutz gemäss EN/IEC61496-1/-2/-3 sicherstellen.

Es ist im industriellen Umfeld üblich, mehrere Lichtschranken räumlich nahe zueinander zu montieren. Es kann daher nicht immer ausgeschlossen werden, dass ein Sender einer ersten Lichtschranke auf einen Empfänger einer zweiten Lichtschranke optisch überspricht. Die betroffene Lichtschranke muss in so einem Fall aber trotzdem störungsfrei arbeiten.

Hierzu sind aus dem Stand der Technik verschiedenste Lösungsansätze bekannt. Beispielsweise wird in der EP0797109 ein Verfahren zum Betreiben einer Lichtschrankenanordnung beschrieben mit zwei synchron arbeitenden Sender/ Empfängerpaaren, wobei jeder der beiden Sender je eine spezifische Kennung aufweisende Lichtsignale in Form von Doppelimpulsen aussendet. Diese Ausführung bedingt, dass die beiden Sender/ Empfängerpaare synchronisiert werden müssen. Dies zu realisieren ist aufwendig.

Aus der EP2230538 ist ein Verfahren zum Betreiben einer optoelektrischen Sensoranordnung bekannt, bei der mehrere Lichtsender Lichtsignale in einen Überwachungsbereich aussenden, wobei wenigstens die Lichtsignale unterschiedliche Grundmodulationsfrequenzen aufweisen. Dadurch ist es möglich zu unterscheiden von welchem Lichtsender das empfangene Lichtsignal ausgesendet wurde. Diese Ausführung bedingt, dass sowohl die Sendereinheit als auch die Empfangseinheit technisch aufwendig ausgeführt sein muss, um die Modulation zuverlässig erzeugen und detektieren zu können.

EP 2 631 682 A2 (D1) zeigt eine Sensoranordnung mit einer Anordnung von Lichtvorhängen und einem Trigger-Generator, welcher zyklisch Trigger-Signale generiert. Jedes Trigger-Signal wird den Lichtvorhängen zugeführt, wobei in jedem Lichtvorhang durch ein empfangenes Trigger-Signal nach einer vorgegebenen Verzögerungszeit ein Messvorgang gestartet wird. Die einzelnen Messvorgänge umfassen jeweils eine bestimmte Anzahl von Messzyklen, bei dem jeweils alle Sender-/Empfängerpaare des Lichtvorhangs einzeln zyklisch nacheinander aktiviert werden. Der Beginn der einzelnen Messvorgänge errechnet sich dadurch, dass für jeden Lichtvorhang eine Verzögerungszeit dazu gerechnet wird, welche als Parameterwert im jeweiligen Lichtvorhang hinterlegt ist. Aufgrund der beschriebenen Sensoranordnung können Messvorgänge zeitlich überlappend oder gleichzeitig durchgeführt werden.

In DE 10 2013 106 785 A1 (D2) ist ein Verfahren zur Synchronisation eines Lichtgitters sowie ein auf diesem Verfahren beruhendes Lichtgitter offenbart. Das Lichtgitter weist eine Sendeeinheit mit einer Vielzahl von Sender, eine Empfangseinheit mit einer Vielzahl von Empfängern, eine Sendersteuereinheit, die die Sender in einem Zyklus (T) nacheinander aktiviert, und eine Empfängersteuereinheit zum Auswerten der Empfänger auf. Jedem Sender ist je ein Empfänger zugeordnet und ein aktivierter Sender sendet zum Empfänger einen Sendestrahl. Zwei Lichtgitter in unmittelbarer Nähe zueinander können betrieben werden, ohne dass sie sich gegenseitig stören oder beeinflussen, indem die Zykluslänge T der einzelnen Lichtgitter variiert wird. Damit die Sendezeitpunkte der beiden Lichtgitter asynchron zueinander versetzt sind, wird der Zyklus T der beiden Lichtgitter jeweils um einen Offset in Form einer Pause erweitert. Aufgabe der Erfindung ist es ein alternatives Verfahren und eine alternative ausgebildete Lichtschrankenanordnung zu schaffen, um wenigstens zwei räumlich nahe zueinander angeordneten Lichtschranken zuverlässig, sicher und störungsfest betreiben zu können. Ausserdem ist es Aufgabe der Erfindung eine Lichtschranke für das Verfahren und die Lichtschrankenanordnung bereitzustellen. Diese Aufgaben werden durch die im Anspruch 1 angegebenen Merkmale für ein Verfahren und durch die im Anspruch 8 angegebenen Merkmale für eine Lichtschrankenanordnung gelöst. Ausgangspunkt der Erfindung ist ein Verfahren zum Betreiben einer Lichtschrankenanordnung gemäss Oberbegriff des Anspruchs 1. Bei entsprechender Wahl des ersten Phasenversatzes $\Delta A$ und des zweiten Phasenversatzes $\Delta B$ kann damit für einen bestimmte Anzahl von Zyklen Interferenzfreiheit garantiert werden. Eine Synchronisation zwischen den beiden Lichtschranken ist nicht nötig. Das erfindungsgemässe Verfahren stellt sicher, dass bei einer definierten Anzahl Zyklen immer nur höchstens einmal während einer Mindestanzahl von Zyklen die Einzellichtpulse der beiden Lichtschranken sich systematisch überlagern bzw. interferiert sind. Zur Klarstellung sei festgehalten, dass unter Zyklus bzw. Zykluszeit jene Zeit verstanden wird, die vergeht bis alle Sender und Empfänger einer Sender- und Empfängereinheit einer Lichtschranke sequentiell aktiviert wurden, um einen Einzellichtpuls auszusenden bzw. zu empfangen. Ferner sei klargestellt, dass die Zyklen der ersten und der zweiten Lichtschranke im Wesentlichen zeitgleich ablaufen. Zeitlich gesehen laufen damit die Zyklen der Lichtschranken parallel ab, d.h. beide Lichtschranken starten ihren jeweiligen Zyklus im Wesentlichen zur selben Zeit.

Weiterbildungen des erfindungsgemässen Verfahrens sind in den Unteransprüchen 2 bis 7 aufgezeigt. Das Verfahren gemäss eines Ausführungsbeispiels kann beispielsweise in vorteilhafter Weise dadurch umgesetzt werden, dass während eines Zyklus die Pulszwischenzeit $T_{Task}$ bei einem einzigen Sender jeder Lichtschranke um die Dauer des Phasenversatzes $\Delta A$, $\Delta B$ verkürzt oder verlängert wird, wobei die Pulszwischenzeit $T_{Task}$ bei allen übrigen Sendern der Lichtschranken gleich lang gehalten wird. Konkret kann somit vorzugsweise am Ende eines Zyklus die Pulszwischenzeit $T_{Task}$ des Senders, welcher als letzter aktiviert wird, angepasst werden. Hierbei ist zu beachten, dass bei einer Lichtschranke mit einer Mehrzahl von Sendern und Empfängern unter Pulszwischenzeit jene Zeit verstanden wird, welche zwischen dem Aussenden von Einzellichtimpulsen durch zwei benachbarte Sender vergeht.

Alternativ ist es auch möglich, dass bei allen Sendern einer Lichtschranke während eines Zyklus die Pulszwischenzeit $T_{Task}$ anteilig um die Dauer des Phasenversatzes $\Delta A$, $\Delta B$ verkürzt oder verlängert wird. Dies bedeutet, dass die Pulszwischenzeit $T_{Task}$ aller Sendern geringfügig angepasst werden muss.

Bei gegebener Pulsbreite $T_{puls}$ der Einzellichtpulse und bei gegebener mittlerer Pulszwischenzeit $T_{Task}$ gilt erfindungsgemäß folgende Ungleichung für die Bestimmung des ersten Phasenversatzes $\Delta A$ und des zweiten Phasenversatzes $\Delta B$:

$$T_{Puls} \leq \left( n_{Zyklus} \cdot \Delta A - \left\lfloor \frac{n_{Zyklus} \cdot N_{Beams_A}}{N_{Beams_B}} \right\rfloor \cdot \Delta B \right) \bmod T_{Task} \leq T_{Task} - T_{Puls}.$$

wobei

$\forall\, n_{zyklus} = \{1,...,(N_{samples} - 1)\}$
$\forall\, N_{Beams_A}$ = für die Anzahl der Strahlen der Lichtschranke mit der Kodierung A
$\forall\, N_{Beams_B}$ = für die Anzahl der Strahlen der Lichtschranke mit der Kodierung B ist.

Hierbei ist

| | |
|---|---|
| $\lvert \Delta A \rvert$ | Phasenversatz der ersten Lichtschranke |
| $\lvert \Delta B \rvert$ | Phasenversatz der zweiten Lichtschranke |
| $T_{Puls}$ | Pulsbreite des Einzellichtpulses |
| $n_{Zyklus}$ | Aktueller Zyklus |
| $N_{Beams_A}$ | Anzahl Lichtstrahlen der ersten Lichtschranke (entspricht der Anzahl der Sender und damit der Anzahl der Empfänger) |
| $N_{Beams_B}$ | Anzahl Lichtstrahlen der ersten Lichtschranke (entspricht der Anzahl der Sender und damit der Anzahl der Empfänger) |
| $T_{Task}$ | Zeit zwischen dem Aussenden zweier benachbarter Einzellichtpulse (Pulszwischenzeit) |
| $N_{Samples}$ | Anzahl Abtastungen eines Lichtstrahles |

Es sind insbesondere folgende Restriktionen einzuhalten:

$\lvert \Delta A \rvert \geq T_{Puls}$
$\lvert \Delta B \rvert \geq T_{Puls}$
$\Delta A \neq \Delta B$
und
$\lvert \Delta A \rvert = \lvert \Delta B \rvert$.

Die zuvor genannte Ungleichung kann nummerisch gelöst werden. Falls die zuvor genannten Bedingungen erfüllt sind und wenn damit der Phasenversatz $\Delta A$ und der Phasenversatz $\Delta B$ entsprechend gewählt werden, sind nach einem interferierten Zyklus die nächsten ($N_{samples}$ - 1) Zyklen garantiert interferenzfrei, d.h. eine Überlagerung der Einzellichtpulse kann ausgeschlossen werden. Die Wahl der Parameter $T_{Puls}$, $T_{Task}$, $\Delta A$, $\Delta B$ und $N_{Samples}$ muss so gewählt werden, dass die geforderte Ansprechzeit und Robustheit der Lichtschranke gegeben ist. In der genannten Ungleichung ist die Anzahl der Lichtstrahlen $N_{BeamsA}$ und $N_{BeamsB}$ berücksichtigt. Daher ist die Erfindung auch bei erfindungsgemässen Lichtschrankenanordnungen und Verfahren einsetzbar, bei denen die Lichtschranken unterschiedliche Längen aufweisen. Beispielsweise kann die erste Lichtschranke eine erste Länge aufweisen und zusammen mit einer zweiten Lichtschranke mit einer zweiten Länge betrieben werden, wobei die Längen vorzugsweise einen Wert zwischen 150mm bis 1800 mm aufweisen und eine Stückelung von 150mm haben können.

Sender und Empfänger der jeweiligen Lichtschranke sind vorzugsweise optisch miteinander synchronisiert. Somit wird zeitgleich mit der Aktivierung eines Senders der diesem Sender zugeordnete Empfänger aktiviert.

Für den Fall, dass in einer Lichtschrankenanordnung mehr als zwei Lichtschranken eingesetzt werden, kann das Verfahren so ausgestaltet sein, dass jede Lichtschranke der Lichtschrankenanordnung mit einem Phasenversatz arbeitet, welcher sich von allen anderen Phasenversätzen der anderen Lichtschranken der Lichtschrankenanordnung unterscheidet.

Die Erfindung betrifft auch eine Lichtschrankenanordnung mit wenigstens einer ersten und einer zweiten Lichtschranke, wobei die erste Lichtschranke erste und die zweite Lichtschranke zweite Sender- und Empfangseinheiten aufweist, wobei alle Sender der ersten Lichtschranke während des Durchlaufs eines ersten Zyklus nacheinander aktivierbar sind, um einen Einzellichtpulse auszusenden und alle Sender der zweiten Lichtschranke während des Durchlaufs eines zweiten Zyklus nacheinander aktivierbar sind, um einen Einzellichtpulse auszusenden, und die Zyklen im Wesentlichen zeitgleich ablaufen, insbesondere zur Verwendung in einem erfindungsgemässen Verfahren, wobei die erste Lichtschranke dazu ausgebildet ist, die Dauer des ersten Zyklus um die Dauer eines ersten Phasenversatzes ∆A zu verlängern oder zu verkürzen, und dass die zweite Lichtschranke dazu ausgebildet ist, die Dauer des zweiten Zyklus um die Dauer eines zweiten Phasenversatzes ∆B zu verlängern oder zu verkürzen.

Aus dem Stand der Technik ist es bekannt, dass die Sender der Lichtschranken als Leuchtdioden, insbesondere IR-Leuchtdioden ausgeführt sind und dass jeder dieser Leuchtdioden ein Impulsgeber zu deren Ansteuerung zugeordnet ist, um Einzellichtpulse zu erzeugen und die Pulszwischenzeit $T_{Task}$ zu steuern. Hierbei kann erfindungsgemäss der Impulsgeber dazu ausgebildet sein, während eines Zyklus die Pulszwischenzeit $T_{Task}$ zwischen zwei benachbarten Sendern um die Dauer des Phasenversatzes ∆A, ∆B zu verkürzen oder zu verlängern, wobei der Impulsgeber dazu ausgebildet ist die Pulszwischenzeit $T_{Task}$ bei allen übrigen Sendern der betreffenden Lichtschranke gleich lang zu belassen.

Vorteilhafte Weiterbildungen der Lichtschrankenanordnung sind in den Unteransprüchen 9 bis 12 aufgezeigt.

Beispielsweise alternativ kann der Impulsgeber dazu ausgebildet sein, bei allen Sendereinheiten einer Lichtschranke während eines Zyklus die Pulszwischenzeit $T_{Task}$ anteilig um die Dauer des Phasenversatzes ∆A, ∆B zu verkürzen oder zu verlängern. Weiters kann in einer Ausführungsform der Lichtschrankenanordnung der Phasenversatz ∆A (35) und der Phasenversatz ∆B (37) vom Impulsgeber so eingestellt sein, dass pro interferierten Zyklus eine Mindestanzahl der nächsten Zyklen interferenzfrei sind. Sind mehr als zwei Lichtschranken in einer Lichtschrankenanordnung verbaut so ist jede Lichtschranke der Lichtschrankenanordnung dazu ausgebildet, mit einem Phasenversatz zu arbeiten, welcher sich von allen anderen Phasenversätzen der anderen Lichtschranken der Lichtschrankenanordnung unterscheidet.

Im Folgenden wird eine Lichtschranke mit einer Sender- und Empfangseinheit beschrieben, insbesondere zur Durchführung eines erfindungsgemässen Verfahrens oder zur Verwendung in einer erfindungsgemässen Lichtschrankenanordnung, wobei die Lichtschranke wenigstens in folgenden Betriebsmodi betreibbar ist:

a) Betrieb mit einem ersten Zyklus, der um die Dauer eines ersten Phasenversatzes ∆A verkürzt oder verlängert ist, oder

b) Betrieb mit einem zweiten Zyklus, der um die Dauer eines zweiten Phasenversatzes ∆B verkürzt oder verlängert ist, oder

c) Betrieb mit unveränderter Dauer eines Zyklus.

Wenn für die einzelne Lichtschranke diese Betriebsmodi einstellbar sind, dann hat dies den Vorteil, dass erst beim Verbauen einer erfindungsgemässen Lichtschrankenanordnung, beispielsweise zur Absicherung einer Fertigungseinrichtung, die Betriebsweise der einzelnen Lichtschranken festgelegt werden muss.

In einer vorteilhaften Ausführungsform weist die Lichtschranke ein Bedienelement auf, um die Betriebsmodi damit einzustellen. Alternativ kann dies mittels eines softwaregestützten Steuerbefehls erfolgen.

Weiters ist es von Vorteil, wenn die Sender mit den Empfängern der Lichtschranke optisch miteinander synchronisiert sind und dass zeitglich mit der Aktivierung eines Senders der diesem Sender zugeordnete Empfänger aktiviert ist.

Das erfindungsgemässe Verfahren bzw. die erfindungsgemässe Lichtschrankenanordnung hat unter anderem die im Folgenden erläuterten Vorteile gegenüber dem bekannten Stand der Technik. Beispielsweise erhöht das Aussenden von Einzellichtpulsen pro Abtastzyklus die Lebensdauer der

Leuchtdioden in den Sendern gegenüber Ausführungsformen von Lichtschranken bei denen als Strahlkodierung Impulsgruppen verwendet werden. Ausserdem ist die Anforderung an die Hardware für die Auswertung von Einzellichtpulsen geringer, denn die Auswirkung der Genauigkeit der Taktgeber für Sender und Empfänger ist von untergeordneter Bedeutung und damit ist auch der Aufwand für die Empfangsschaltung geringer.

Weiters ist die Wahrscheinlichkeit, dass Störlichtpulse, wie sie zum Beispiel von Schweissanlagen verursacht werden können, eine allfällige Kodierungsinformation im Lichtpuls zerstören, bei Verwendung von nicht kodierten Emzellichtpulsen kleiner. Einzellichtpulse sind somit gegenüber Pulsgruppen robuster. Zudem können bei der Auswertung von Einzellichtpulsen einfachere Algorithmen zum Einsatz kommen. Komplexere Kodierungsverfahren benötigen ausserdem in der Regel mehr Realisierungsaufwand und sind daher bezüglich Speicherbelegung und CPU-Auslastung ineffizienter.

Die zuvor genannten optionalen Merkmale können in beliebiger Kombination verwirklicht werden, soweit sie sich nicht gegenseitig ausschliessen. Weitere Vorteile und Merkmale der Erfindung ergeben sich aus der nachfolgenden Beschreibung der Erfindung unter Bezugnahme auf schematische Darstellungen.

Es zeigen:

Figur 1:    eine schematische Darstellung einer Lichtschrankenanordnung;

Figur 2:    eine schematische Darstellung der Realisierung des Phasenversatzes bei Lichtschranken gleicher Länge, wobei auf der gedachten X-Achse die Zeit aufgetragen ist;

Figur 3:    ein Diagramm, welches die zeitliche Abfolge der Einzellichtpulse veranschaulicht.

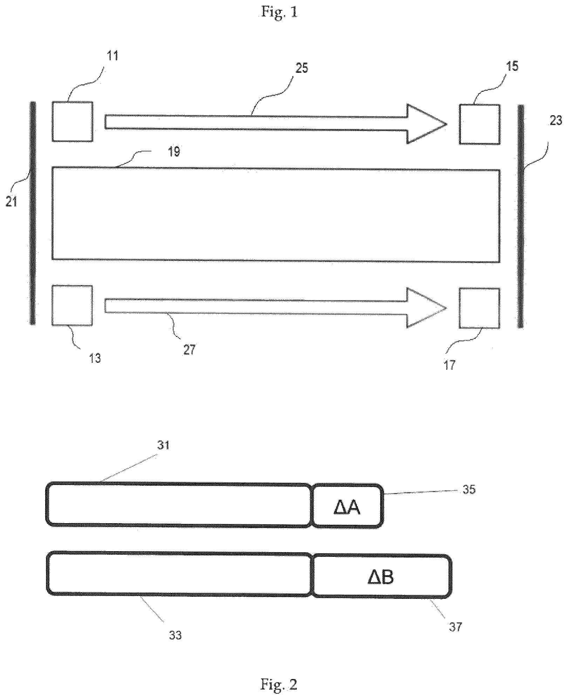

In Figur 1 ist eine erfindungsgemässe Lichtschrankenanordnung gezeigt. Die Lichtschrankenanordnung sichert einen Gefahrenbereich 19 ab, der einerseits durch Wände 21, 23 begrenzt ist und der zwei Zugänge aufweist, die durch zwei Lichtschranken abgesichert sind. Die erste Lichtschranke besteht im Wesentlichen aus einer ersten Sendereinheit 11 und einer ersten Empfangseinheit 15 und sendet Lichtstrahlen in der Hauptstrahlrichtung 25 der ersten Lichtschranke ab. Analog dazu besteht im Wesendichen die zweite Lichtschranke aus einer zweiten Sendereinheit 13 und einer zweiten Empfangseinheit 17 und sendet Lichtstrahlen in der Hauptstrahlrichtung 27 der zweiten Lichtschranke ab. Jeder Sendereinheit 11, 13 weist wenigstens einen nicht dargestellten Sender auf, der von einem ebenfalls nicht dargestellten Impulsgeber in bekannter Art und Weise angesteuert wird. Hierbei kann jedem Sender ein Impulsgeber zugordnet sein oder es kann ein Impulsgeber sequentiell mehrere Sender ansteuern. Jede Empfangseinheit 15, 17 einer Lichtschranke weist dieselbe Anzahl an Empfängern auf wie sie Sender hat.

Aufgrund der räumlichen Nähe ist nicht auszuschliessen, dass Lichtstrahlen, welche von der Sendereinheit 11 der ersten Lichtschranke auf die Empfangseinheit 17 der zweiten Lichtschranke überspringen und zu Fehldetektion führen.

Um dies zu vermeiden wird daher erfindungsgemäss die Zykluszeit 31 der ersten Lichtschranke mit einem Phasenversatz $\Delta A$ 35 beaufschlagt und die Zykluszeit 33 der zweiten Lichtschranke mit einem Phasenversatz $\Delta B$ 37. Hierbei ist zu beachten, dass in Figur 2 schematisch die zeitliche Situation für Lichtschranken dargestellt ist, die gleiche Länge aufweisen, genauer gesagt, die dieselbe Anzahl von Sendern und Empfängern bzw. dieselbe Anzahl von Lichtstrahlen aussenden.

In Figur 4 ist ein Diagramm gezeigt, welches die zeitliche Abfolge der Einzellichtpulse veranschaulicht. Auf der obersten Zeitachse sind die Einzellichtpulse 41, 42, 43 einer zweiten Lichtschranke dargestellt und auf der darunter liegenden Zeitachse die Einzellichtpulse 45, 46, 47 einer ersten Lichtschranke im Zyklus $n_{Zyklus}$. Es ist ersichtlich, dass die Einzellichtpulse 41 mit 45, 42 mit 46 sowie 43 mit 47 zeitgleich auftreten; in diesem dargestellten Zyklus $n_{Zyklus}$ überlagern bzw. interferieren sich die Einzellichtpulse der beiden Lichtschranken. Ausserdem sind die Einzellichtpulse 41, 42 und 43 bzw. 45, 46 und 47 voneinander zeitlich beabstandet, wobei der Abstand die Pulszwischenzeit $T_{Task}$ ist. Alle Einzellichtpulse weisen die selbe Pulsbreite $T_{puls}$ auf.

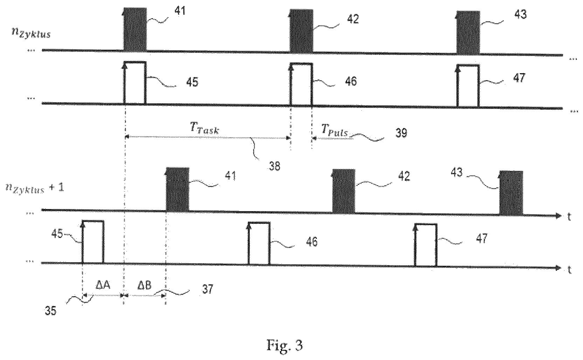

In Figur 3 ist auf den unteren beiden Zeitachsen die zeitliche Lage der Einzellichtpulse 41, 42, 43 bzw. 45, 46 und 47 im Zyklus $n_{Zyklus} + 1$ gezeigt. Hierbei ist erkennbar, dass der Einzellichtpuls 45 - und in der Folge die Einzellichtpulse 46 und 47 - um einen Phasenversatz $\Delta A$ 35 früher ausgesendet werden, als dies im Zyklus $n_{zyklus}$ der Fall war. Der Einzellichtpuls 41 - und in der Folge die Einzellichtpulse 42 und 43 werden um einen Phasenversatz $\Delta B$ 37 später ausgesendet, als dies im Zyklus $n_{Zyklus}$ der Fall war. Es ist erkennbar, dass sich die Einzellichtpulse 41, 42, 43 bzw. 45, 46 und 47 der beiden Lichtschranken für diesen Zyklus nicht überlagern. Ein störungsfreier Betrieb ist gewährleistet.

Im nicht dargestellten Zyklus $n_{Zyklus} + 2$ werden die Einzellichtpulse 41, 42 und 43 sowie die übrigen nicht dargestellten Einzellichtpulse der zweiten Lichtschranke wiederum um den Phasenversatz $\Delta A$ 35 früher ausgesendet und die Einzellichtpulse 45, 46 und 47 sowie die übrigen nicht dargestellten Einzellichtpulse der ersten Lichtschranke wiederum um den Phasenversatz $\Delta B$ 37 später ausgesendet. Es ergibt sich eine zeitlich andere Streuung der Einzellichtpulse, allerdings ist wiederum eine Überlagerung ausgeschlossen und zwar solange bis die Mindestanzahl an Zyklen erreicht ist, die bei der Berechnung angenommen wurde.

Somit stellt das erfindungsgemässe Verfahren bzw. die erfindungsgemässe Lichtschrankenanordnung sicher, dass von einer definierten Anzahl an Zyklen immer höchstens einer systematisch interferiert ist. Dies wird insbesondere durch unterschiedlich lange Zykluszeiten beim ersten und beim zweiten Lichtgitter erreicht.

Das erfindungsgemässe Verfahren bzw. die erfindungsgemässe Lichtschrankenanordnung ist für zwei sich potentiell beeinflussenden Lichtschranken gezeigt. Es ist aber im Rahmen der erfindungsgemässen Idee auch möglich, die Anzahl der Lichtschranken höher zu wählen.

Generell ist festzuhalten, dass in der Beschreibung immer der allgemeine Begriff Lichtschranke bzw. Lichtschrankenanordnung verwendet wurde. Dieser Begriff umfasst im Rahmen der Erfindung auch Lichtgitter und Lichtvorhänge bzw. Lichtgitteranordnungen und Lichtvorhanganordnungen. Weiters ist festzuhalten, dass die Erfindung auf Basis von Einzellichtpulsen erläutert wurde. Es versteht sich aber von selbst, dass die Erfindung auch bei Lichtschranken mit Mehrfachlichtpulsen, wie zum Beispiel Doppelpulsen, angewendet werden kann. Hierbei ist erfindungsgemäss darauf zu achten, dass sich die Mehrfachlichtpulse nicht überlagern. Im einfachsten Fall heisst das, dass bei der Berechnung der Phasenversätze die Dauer des Aussendens der Mehrfachlichtpulse gleichzusetzen ist mit der Pulsbreite $T_{puls}$ des Einzellichtpulses bei einer Lichtschranke mit Einzellichtpulsen.

BEZUGSZEICHENLISTE:

11  Sendereinheit der ersten Lichtschranke
13  Sendereinheit der zweiten Lichtschranke
15  Empfangseinheit der ersten Lichtschranke
17  Empfangseinheit der zweiten Lichtschranke
19  Gefahrenbereich
21  Wand
23  Wand
25  Hauptstrahlrichtung der ersten Lichtschranke
27  Hauptstrahlrichtung der zweiten Lichtschranke
31  Zykluszeit der ersten Lichtschranke
33  Zykluszeit der zweiten Lichtschranke
35  Phasenversatz $\Delta A$ der ersten Lichtschranke
37  Phasenversatz $\Delta B$ der zweiten Lichtschranke
38  Pulszwischenzeit $T_{Task}$ der ersten Lichtschranke
39  Pulsbreite $T_{puls}$ eines Einzellichtpulses
41  Einzellichtpuls der ersten Sendereinheit der zweiten Lichtschranke
42  Einzellichtpuls der zweiten Sendereinheit der zweiten Lichtschranke
43  Einzellichtpuls der dritten Sendereinheit der zweiten Lichtschranke
45  Einzellichtpuls der ersten Sendereinheit der ersten Lichtschranke
46  Einzellichtpuls der zweiten Sendereinheit der ersten Lichtschranke
47  Einzellichtpuls der dritten Sendereinheit der ersten Lichtschranke

**Patentansprüche**

**1.** Verfahren zum Betreiben einer Lichtschrankenanordnung mit wenigstens einer ersten und einer zweiten Lichtschranke, wobei die erste Lichtschranke erste Sender- (11) und Empfangseinheiten (15) und die zweite Lichtschranke zweite Sender- (13) und Empfangseinheiten (17) aufweist, wobei alle Sender der ersten Sender- (11) und Empfangseinheiten (15) während des Durchlaufs eines ersten Zyklus (31) nacheinander aktiviert werden, um Einzellichtpulse (45, 46, 47) auszusenden und alle Sender der zweiten Sender- (13) und Empfangseinheiten (17) während des Durchlaufs eines zweiten Zyklus (33) nacheinander aktiviert werden, um Einzellichtpulse (41, 42, 43) auszusenden, und die Zyklen (31, 33) im Wesentlichen zeitgleich ablaufen und die Zyklen der ersten und zweiten Lichtschranke eine bestimmte Anzahl von Zyklen $N_{samples}$ wiederholt werden wobei die Einzellichtpulse der ersten Lichtschranke gegenüber einem Referenzzyklus um einen Phasenversatz $\Delta A$ und die Einzellichtpulse der zweiten Lichtschranke um einen Phasenversatz $\Delta B$ zeitversetzt werden,
**dadurch gekennzeichnet,**
**dass** bei gegebener Pulsbreite $T_{puls}$ (39) der Einzellichtpulse (41, 42, 43; 45, 46, 47) und bei gegebener mittlerer Pulszwischenzeit $T_{Task}$ (38) die Bestimmung des ersten Phasenversatzes $\Delta A$ (35) und des zweiten Phasenversatzes $\Delta B$ (37) für jeden Zyklus $n_{Zyklus}$ gemäss folgende Ungleichung erfolgt

$$T_{Puls} \leq \left( n_{Zyklus} \cdot \Delta A - \left\lfloor \frac{n_{Zyklus} \cdot N_{Beams_A}}{N_{Beams_B}} \right\rfloor \cdot \Delta B \right) \bmod T_{Task} \leq T_{Task} - T_{Puls}.$$

wobei

$\forall\ n_{zyklus} = \{1,...,(N_{samples} - 1)\}$
$\vee\ N_{Beams_A}$ = die Anzahl der Strahlen der ersten Lichtschranke
$\vee\ N_{Beams_B}$ = die Anzahl der Strahlen der zweiten Lichtschranke

ist und folgende Restriktionen für die Bestimmung des ersten Phasenversatzes ΔA (35) und des zweiten Phasenversatzes ΔB (37) gelten:

$|\Delta A| \geq T_{Puls}$
$|\Delta B| \geq T_{Puls}$
$\Delta A \neq \Delta B$ und
$|\Delta A| = |\Delta B|$.

2. Verfahren zum Betreiben einer Lichtschrankenanordnung nach Anspruch 1,
   **dadurch gekennzeichnet,**
   **dass** während eines Zyklus (31, 33) die Pulszwischenzeit $T_{Task}$ (38) bei einem einzigen Sender jeder Lichtschranke um die Dauer des Phasenversatzes ΔA, ΔB (35, 37) verkürzt oder verlängert wird und
   **dass** die Pulszwischenzeit $T_{Task}$ (38) bei allen übrigen Sendern der jeweiligen Lichtschranke gleich lang ist.

3. Verfahren zum Betreiben einer Lichtschrankenanordnung nach Anspruch 1,
   **dadurch gekennzeichnet,**
   **dass** bei allen Sendern einer Lichtschranke während eines Zyklus (31, 33) die Pulszwischenzeit $T_{Task}$ (38) anteilig um die Dauer des Phasenversatzes ΔA, ΔB (35, 37) verkürzt oder verlängert wird.

4. Verfahren zum Betreiben einer Lichtschrankenanordnung nach den vorigen Ansprüchen ,
   **dadurch gekennzeichnet,**
   **dass** die Sender mit den Empfängern optisch miteinander synchronisiert werden und dass zeitgleich mit der Aktivierung eines Senders der diesem Sender zugeordnete Empfänger aktiviert wird.

5. Verfahren zum Betreiben einer Lichtschrankenanordnung nach den vorigen Ansprüchen,
   **dadurch gekennzeichnet,**
   das der Phasenversatz ΔA (35) und der Phasenversatz ΔB (37) so gewählt werden, dass pro interferierten Zyklus eine Mindestanzahl der nächsten Zyklen interferenzfrei sind.

6. Verfahren zum Betreiben einer Lichtschrankenanordnung nach den vorigen Ansprüchen,
   **dadurch gekennzeichnet,**
   **dass** der erste Phasenversatz ΔA (35) und der zweite Phasenversatz ΔB (37) für eine Lichtschrankenanordnung ermittelt wird, bei der die Anzahl der Sender und damit die Anzahl der Lichtstrahlen gleich gross ist.

7. Verfahren zum Betreiben einer Lichtschrankenanordnung nach den vorigen Ansprüchen,
   **dadurch gekennzeichnet,**
   das jede Lichtschranke der Lichtschrankenanordnung mit einem Phasenversatz arbeitet, welcher sich von allen anderen Phasenversätzen der anderen Lichtschranken der Lichtschrankenanordnung unterscheidet.

8. Lichtschrankenanordnung mit wenigstens einer ersten und einer zweiten Lichtschranke, wobei die erste Lichtschranke erste und die zweite Lichtschranke zweite Sender- und Empfangseinheiten (11,13) aufweist, wobei alle Sender der ersten Lichtschranke während des Durchlaufs eines ersten Zyklus (31) nacheinander aktivierbar sind, um Einzellichtpulse (45, 46, 47) auszusenden und alle Sender der zweiten Lichtschranke während des Durchlaufs eines zweiten Zyklus (33) nacheinander aktivierbar sind um Einzellichtpulse (41, 42, 43) auszusenden, die Zyklen (31,33) im Wesentlichen zeitgleich ablaufen, und die Zyklen der ersten und zweiten Lichtschranke eine bestimmte Anzahl von Zyklen $N_{samples}$ wiederholt werden,
   wobei die Einzellichtpulse der ersten Lichtschranke gegenüber einem Referenzzyklus um einen Phasenversatz ΔA und die Einzellichtpulse der zweiten Lichtschranke um einen Phasenversatz ΔB zeitversetzt sind,

**dadurch gekennzeichnet,**
**dass** bei gegebener Pulsbreite $T_{puls}$ (39) der Einzellichtpulse (41, 42, 43; 45, 46, 47) und bei gegebener mittlerer Pulszwischenzeit $T_{Task}$ (38) die Bestimmung des ersten Phasenversatzes $\Delta A$ (35) und des zweiten Phasenversatzes $\Delta B$ (37) für jeden Zyklus $n_{Zyklus}$ gemäss folgende Ungleichung erfolgt

$$T_{Puls} \leq \left( n_{Zyklus} \cdot \Delta A - \left\lfloor \frac{n_{Zyklus} \cdot N_{Beams_A}}{N_{Beams_B}} \right\rfloor \cdot \Delta B \right) \bmod T_{Task} \leq T_{Task} - T_{Puls}.$$

wobei

$\forall\, n_{zyklus} = \{1,\ldots, (N_{samples} - 1)\}$
$\forall\, N_{Beams_A}$ = die Anzahl der Strahlen der ersten LichtschrankeV $N_{Beams_B}$ = die Anzahl der Strahlen der zweiten Lichtschranke ist und folgende Restriktionen für die Bestimmung des ersten Phasenversatzes $\Delta A$ (35) und des zweiten Phasenversatzes $\Delta B$ (37) gelten:

$|\Delta A| \geq T_{Puls}$
$|\Delta B| \geq T_{Puls}$
$\Delta A \neq \Delta B$ und
$|\Delta A| = |\Delta B|$.

9.  Lichtschrankenanordnung nach Anspruch 8,
    wobei jeder Sender der Lichtschranken eine Leuchtdiode aufweist und dieser ein Impulsgeber zu deren Ansteuerung zugeordnet ist, um Einzellichtpulse (41, 42, 43; 45, 46, 47) zu erzeugen und die Pulszwischenzeit $T_{Task}$ (38) zu steuern, **dadurch gekennzeichnet,**
    **dass** der Impulsgeber einer jeden Lichtschranke dazu ausgebildet ist, während eines Zyklus die Pulszwischenzeit $T_{Task}$ (38) zwischen zwei benachbarten Sendern um die Dauer des Phasenversatzes $\Delta A$, $\Delta B$ (35, 37) zu verkürzen oder zu verlängern
    und **dass** der Impulsgeber dazu ausgebildet ist die Pulszwischenzeit $T_{Task}$ (38) bei allen übrigen Sendern der Lichtschranke gleich lang zu belassen.

10. Lichtschrankenanordnung nach Anspruch 9,
    **dadurch gekennzeichnet,**
    **dass** der Impulsgeber dazu ausgebildet ist, bei allen Sendern einer Lichtschranke während eines Zyklus (31, 33) die Pulszwischenzeit $T_{Task}$ (38) anteilig um die Dauer des Phasenversatzes $\Delta A$, $\Delta B$ (35, 37) zu verkürzen oder zu verlängern.

11. Lichtschrankenanordnung nach einem der vorigen Ansprüche 9 bis 10,
    **dadurch gekennzeichnet**,
    das der Phasenversatz $\Delta A$ (35) und der Phasenversatz $\Delta B$ (37) vom Impulsgeber so eingestellt ist, dass pro interferierten Zyklus eine Mindestanzahl der nächsten Zyklen interferenzfrei sind.

12. Lichtschrankenanordnung nach einem der vorigen Ansprüche 8 bis 11,
    **dadurch gekennzeichnet,**
    **dass** jede Lichtschranke der Lichtschrankenanordnung dazu ausgebildet ist mit einem Phasenversatz zu arbeiten, welcher sich von allen anderen Phasenversätzen der anderen Lichtschranken der Lichtschrankenanordnung unterscheidet.

**Claims**

1.  A method of operating a photoelectric barrier with at least one first and one second optoelectronic machine guard, wherein the first optoelectronic machine guard has first transmitter units (11) and receiver units (15), and the second optoelectronic machine guard has second transmitter units (13) and receiver units (17), wherein all transmitters of the first transmitter units (11) and receiver units (15) are successively activated during the run of a first cycle (31) so as to emit single light pulses (45, 46, 47) and all transmitters of the second transmitter units (13) and receiver units (17) are successively activated during the run of a second cycle (33) so as to emit single light pulses (41, 42, 43), and the cycles (31, 33) occur substantially simultaneously and the cycles of the first and of the second optoelectronic machines are repeated a certain number of cycles $N_{samples}$,
whereas the single light pulses of the first optoelectronic machine guard are offset in time by a phase shift ΔA and the single light pulses of the second optoelectronic machine guard by a phase shift ΔB in relation to a reference cycle, **characterized in that** for a given pulse width $T_{puls}$ (39) of the single light pulses (41, 42, 43; 45, 46, 47) and for a given average pulse intermediate time $T_{Task}$ (38), the first phase offset ΔA (35) and the second phase offset ΔB (37) of each cycle $n_{Zyklus}$ is determined by the following inequality:

$$T_{Puls} \leq \left( n_{Zyklus} \cdot \Delta A - \left\lfloor \frac{n_{Zyklus} \cdot N_{Beams_A}}{N_{Beams_B}} \right\rfloor \cdot \Delta B \right) mod\, T_{Task} \leq T_{Task} - T_{Puls}.$$

wherein

$\forall\, n_{zyklus} = \{1,...,(N_{samples} - 1)\}$
$\forall\, N_{Beams_A}$ = the number of beams of the first optoelectronic machine guard
$\forall\, N_{Beams_B}$ = the number of beams of the second optoelectronic machine guard is and the following restrictions apply for determining the first phase offset ΔA (35) and the second phase offset ΔB (37):

$|\Delta A| \geq T_{Puls}$
$|\Delta B| \geq T_{Puls}$
ΔA ≠ ΔB and
$|\Delta A| = |\Delta B|$.

2. The method of operating a photoelectric barrier according to claim 1, **characterized in that** during a cycle (31, 33) the pulse intermediate time $T_{task}$ (38) in a single transmitter of each optoelectronic machine guard is shortened or lengthened by the duration of the phase offset ΔA, ΔB (35, 37), and that the pulse intermediate time $T_{Task}$ (38) in all the other transmitters of the respective optoelectronic machine guard is the same length.

3. The method of operating a photoelectric barrier according to claim 1, **characterized in that** for all the transmitters of an optoelectronic machine guard during a cycle (31, 33), the pulse intermediate time $T_{Task}$ (38) is proportionally shortened or lengthened by the duration of the phase offset ΔA, ΔB (35, 37).

4. The method of operating a photoelectric barrier according to any one of the above claims, **characterized in that** the transmitters are optically synchronized with one another and that simultaneously with the activation of a transmitter, the receiver assigned to said transmission is activated.

5. The method of operating a photoelectric barrier according to any one of the above claims, **characterized in that** the phase offset ΔA (35) and the phase offset ΔB (37) are selected so that a minimal number of subsequent cycles are interference free per interfered cycle.

6. The method of operating a photoelectric barrier according to any one of the above claims, **characterized in that** the first phase offset ΔA (35) and the second phase offset ΔB (37) are obtained for a photoelectric barrier in which the number of transmitters and thus the number of light beams are of equal size.

7. The method of operating a photoelectric barrier according to any one of the above claims, **characterized in that** each optoelectronic machine guard of the photoelectric barrier operates with a phase offset that differs from all other phase offsets of the other optoelectronic machine guards of the photoelectric barrier.

8. The photoelectric barrier with at least one first and one second optoelectronic machine guard, wherein the first optoelectronic machine guard has first and the second optoelectronic machine guard has second transmitter and receiver units (11, 13), wherein all transmitters of the first optoelectronic machine guard may be successively activated during the run of the first cycle (31) so as to emit single light pulses (45, 46, 37) and all transmitters of the second optoelectronic machine guard can be successively activated during the run of a second cycle (33) so as to emit single light pulses (41, 42, 43), and the cycles (31, 33) occur substantially simultaneously and the cycles of the first and of the second optoelectronic machines are repeated a certain number of cycles $N_{samples}$, whereas the single light pulses of the first optoelectronic machine guard are offset in time by a phase shift ΔA and the single light pulses of the second optoelectronic machine guard by a phase shift ΔB in relation to a reference cycle,

**characterized in that**

for a given pulse width $T_{puls}$ (39) of the single light pulses (41, 42, 43; 45, 46, 47) and for a given average pulse intermediate time $T_{Task}$ (38), the first phase offset $\Delta A$ (35) and the second phase offset $\Delta B$ (37) of each cycle $n_{Zyklus}$ is determined by the following inequality:

$$T_{Puls} \leq \left( n_{Zyklus} \cdot \Delta A - \left\lfloor \frac{n_{Zyklus} \cdot N_{Beams_A}}{N_{Beams_B}} \right\rfloor \cdot \Delta B \right) mod\ T_{Task} \leq T_{Task} - T_{Puls}.$$

wherein

$\forall\ n_{zyklus} = \{1,...,(N_{samples} - 1)\}$
$\forall\ N_{Beams_A}$ = the number of beams of the first optoelectronic machine guard
$\forall\ N_{Beams_B}$ = the number of beams of the second optoelectronic machine guard is and the following restrictions apply for determining the first phase offset $\Delta A$ (35) and the second phase offset $\Delta B$ (37):

$|\Delta A| \geq T_{Puls}$
$|\Delta B| \geq T_{Puls}$
$\Delta A \neq \Delta B$ and
$|\Delta A| = |\Delta B|$.

9. The photoelectric barrier according to claim 12, wherein each transmitter of the optoelectronic machine guards has an LED to which a pulse generator is assigned in order to control it, so as to produce single light pulses (41, 42, 43; 45, 46, 47) and to control the pulse intermediate time $T_{Task}$ (38), **characterized in that** the pulse generator of each optoelectronic machine guard is configured so as to shorten or lengthen the pulse intermediate time $T_{Task}$ (38) between two adjacent transmitters by the duration of the phase offset $\Delta A$, $\Delta B$ (35, 37), and that the pulse generator is configured to keep the pulse intermediate time $T_{Task}$ (38) of equal length for all other transmitters of the optoelectronic machine guard.

10. The photoelectric barrier according to claim 9, **characterized in that** the pulse generator is configured so as to shorten or lengthen the pulse intermediate time $T_{Task}$ (38) in all transmitters of an optoelectronic machine guard during a cycle (31, 33) proportionally by the duration of the phase offset $\Delta A$, $\Delta B$ (35, 37).

11. The photoelectric barrier according to one of the claims 9 to 10, **characterized in that** the phase offset $\Delta A$ (35) and the phase offset $\Delta B$ (37) are set by the pulse generator such that a minimal number of subsequent cycles are interference-free per interfered cycle.

12. The photoelectric barrier according to any one of claims 8 to 12, **characterized in that** each optoelectronic machine guard of the photoelectric barrier is configured to operate with a phase offset which differs from all other phase offsets of the other optoelectronic machine guards of the photoelectric barrier.

**Revendications**

1. Procédé pour faire fonctionner un arrangement de barrières optiques avec au moins une première et une seconde barrière optique, cependant que la première barrière optique présente de premières unités d'émission (11) et de réception (15) et la seconde barrière optique de secondes unités d'émission (13) et de réception (17), cependant que tous les émetteurs des premières unités d'émission (11) et de réception (15) sont activés les uns après les autres pendant qu'un premier cycle (31) est traversé pour émettre des impulsions lumineuses uniques (45, 46, 47) et que tous les émetteurs des secondes unités d'émission (13) et de réception (17) sont activés les uns après les autres pendant qu'un second cycle (33) est traversé pour émettre des impulsions lumineuses uniques (41, 42, 43) et que les cycles (31, 33) se déroulent sensiblement de manière synchrone et les cycles de la première et de la seconde barrière optique se répètent un certain nombre de cycles $N_{samples}$, cependant que les impulsions lumineuses uniques de la première barrière optique sont décalées dans le temps par rapport à un cycle de référence d'un décalage de phase $\Delta A$ et que les impulsions lumineuses uniques de la seconde barrière optique sont décalées dans le temps d'un décalage de phase $\Delta B$, **caractérisé en ce que**, pour une largeur d'impulsion donnée $T_{puls}$ (39) des impulsions lumineuses uniques (41, 42, 43 ; 45, 46, 47) et pour un intervalle moyen donné entre les impulsions $T_{task}$ (38), la détermination du premier décalage de phase ΔA (35) et du second décalage de phase ΔB (37) se fait pour chaque cycle n<sub>Zyklus</sub> selon l'inégalité suivante

$$T_{Puls} \leq \left( n_{Zyklus} \cdot \Delta A - \left\lfloor \frac{n_{Zyklus} \cdot N_{Beams_A}}{N_{Beams_B}} \right\rfloor \cdot \Delta B \right) mod\, T_{Task} \leq T_{Task} - T_{Puls}.$$

cependant que

$\forall$ n<sub>Zyklus</sub> = {1,...,($N_{samples}$ -1)}
$\forall$ $N_{Beams_A}$ = le nombre de faisceaux de la première barrière optique
$\forall$ $N_{Beams_B}$ = le nombre de faisceaux de la seconde barrière optique et que les restrictions suivantes sont valables pour la détermination du premier décalage de phase ΔA (35) et du second décalage de phase ΔB (37) :

$|\Delta A| \geq T_{Puls}$
$|\Delta B| \geq T_{Puls}$
$\Delta A \neq \Delta B$
et
$|\Delta A| = |\Delta B|.$

2.  Procédé pour faire fonctionner un arrangement de barrières optiques selon la revendication 1, **caractérisé en ce que**, pendant un cycle (31, 33), l'intervalle entre les impulsions T<sub>task</sub> (38) est raccourci ou prolongé de la durée du décalage de phase ΔA, ΔB (35, 37) pour un seul émetteur de chaque barrière optique et que pour tous les autres émetteurs de la barrière optique respective l'intervalle entre les impulsions T<sub>task</sub> (38) est de la même longueur.

3.  Procédé pour faire fonctionner un arrangement de barrières optiques selon la revendication 1, **caractérisé en ce que**, pendant un cycle (31, 33), l'intervalle entre les impulsions T<sub>task</sub> (38) est raccourci ou prolongé proportionnellement de la durée du décalage de phase ΔA, ΔB (35, 37) pour tous les émetteurs d'une barrière optique.

4.  Procédé pour faire fonctionner un arrangement de barrières optiques selon les revendications précédentes, **caractérisé en ce que** les émetteurs sont synchronisés avec les récepteurs les uns avec les autres sur le plan optique et qu'en même temps que l'activation d'un émetteur le récepteur associé à cet émetteur est activé.

5.  Procédé pour faire fonctionner un arrangement de barrières optiques selon les revendications précédentes, **caractérisé en ce que** le décalage de phase ΔA (35) et le décalage de phase ΔB (37) sont choisis tels que, par cycle interféré, un nombre minimal des prochains cycles est sans interférence.

6.  Procédé pour faire fonctionner un arrangement de barrières optiques selon les revendications précédentes, **caractérisé en ce que** le premier décalage de phase ΔA (35) et le second décalage de phase ΔB (37) sont déterminés pour un arrangement de barrières optiques pour lequel le nombre d'émetteurs et donc le nombre de faisceaux lumineux est égal.

7.  Procédé pour faire fonctionner un arrangement de barrières optiques selon les revendications précédentes, **caractérisé en ce que** chaque barrière optique de l'arrangement de barrières optiques travaille avec un décalage de phase qui diffère de tous les autres décalages de phase des autres barrières optiques de l'arrangement de barrières optiques.

8.  Arrangement de barrières optiques avec au moins une première et une seconde barrière optique, cependant que la première barrière optique présente des premières unités d'émission et de réception et la seconde barrière optique des secondes unités d'émission et de réception (11, 13), cependant que tous les émetteurs de la première barrière optique peuvent être activés les uns après les autres pendant qu'un premier cycle (31) est traversé pour émettre des impulsions lumineuses uniques (45, 46, 47) et que tous les émetteurs de la seconde barrière optique peuvent être activés les uns après les autres pendant qu'un second cycle (33) est traversé pour émettre des impulsions lumineuses uniques (41, 42, 43), que les cycles (31, 33) se déroulent sensiblement de manière synchrone et que les cycles de la première et de la seconde barrière optique se répètent un certain nombre de cycles $N_{samples}$, cependant que les impulsions lumineuses uniques de la première barrière optique sont décalées dans le temps par rapport à un cycle de référence d'un décalage de phase ΔA et que les impulsions lumineuses uniques de la seconde barrière optique sont décalées dans le temps d'un décalage de phase ΔB, **caractérisé en ce**

**que**, pour une largeur d'impulsion donnée $T_{puls}$ (39) des impulsions lumineuses uniques (41, 42, 43 ; 45, 46, 47) et pour un intervalle moyen donné entre les impulsions $T_{task}$ (38), la détermination du premier décalage de phase $\Delta A$ (35) et du second décalage de phase $\Delta B$ (37) se fait pour chaque cycle $n_{Zyklus}$ selon l'inégalité suivante

$$T_{Puls} \leq \left( n_{Zyklus} \cdot \Delta A - \left\lfloor \frac{n_{Zyklus} \cdot N_{Beams_A}}{N_{Beams_B}} \right\rfloor \cdot \Delta B \right) mod\ T_{Task} \leq T_{Task} - T_{Puls}.$$

cependant que

$\forall\ n_{Zyklus} = \{1,..., (N_{samples} -1)\}$
$\forall\ N_{BeamsA}$ = le nombre de faisceaux de la première barrière optique
$\forall\ N_{BeamsB}$ = le nombre de faisceaux de la seconde barrière optique et que les restrictions suivantes sont valables pour la détermination du premier décalage de phase $\Delta A$ (35) et du second décalage de phase $\Delta B$ (37) :

$|\Delta A| \geq T_{Puls}$
$|\Delta B| \geq T_{Puls}$
$\Delta A \neq \Delta B$
et
$|\Delta A| = |\Delta B|$.

9. Arrangement de barrières optiques selon la revendication 8, cependant que chaque émetteur des barrières optiques présente une diode lumineuse et qu'un émetteur d'impulsions lui est associé pour la commande de celle-ci pour produire des impulsions lumineuses uniques (41, 42, 43 ; 45, 46, 47) et pour commander l'intervalle entre les impulsions $T_{task}$ (38), **caractérisé en ce que** l'émetteur d'impulsions de chaque barrière optique est configuré pour raccourcir ou prolonger l'intervalle entre les impulsions $T_{task}$ (38) entre deux émetteurs voisins de la durée du décalage de phase $\Delta A$, $\Delta B$ (35, 37) pendant un cycle et que l'émetteur d'impulsions est configuré pour laisser égal l'intervalle entre les impulsions $T_{task}$ (38) pour tous les autres émetteurs de la barrière optique.

10. Arrangement de barrières optiques selon la revendication 9, **caractérisé en ce que** l'émetteur d'impulsions est configuré pour raccourcir ou prolonger l'intervalle entre les impulsions $T_{task}$ (38) proportionnellement de la durée du décalage de phase $\Delta A$, $\Delta B$ (35, 37) pour tous les émetteurs d'une barrière optique pendant un cycle (31, 33).

11. Arrangement de barrières optiques selon l'une des revendications précédentes 9 à 10, **caractérisé en ce que** le décalage de phase $\Delta A$ (35) et le décalage de phase $\Delta B$ (37) sont réglés par l'émetteur d'impulsions de telle manière que, par cycle interféré, un nombre minimal des prochains cycles soit sans interférence.

12. Arrangement de barrières optiques selon l'une des revendications précédentes 8 à 11, **caractérisé en ce que** chaque barrière optique de l'arrangement de barrières optiques est configuré pour travailler avec un décalage de phase qui diffère de tous les autres décalages de phase des autres barrières optiques de l'arrangement de barrières optiques.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0797109 A
- EP 2230538 A
- EP 2631682 A2
- DE 102013106785 A1